# FASCICULE DE BREVET EUROPEEN

(11) **EP 4 689 588 B1**
(45) Date de publication et mention de la délivrance du brevet: **09.12.2026**
(21) Numéro de dépôt: 24704145.2
(22) Date de dépôt: 07.02.2024
(51) Int. Cl.: G01M 3/20, G01M 3/22

(54) **DISPOSITIF ET PROCÉDÉ DE DÉTECTION POUR LE CONTRÔLE D'ÉTANCHÉITÉ DE PRODUITS SCELLÉS**
ERFASSUNGSVORRICHTUNG UND VERFAHREN ZUR ÜBERPRÜFUNG DER DICHTHEIT VON VERSIEGELTEN PRODUKTEN
DETECTING DEVICE AND METHOD FOR INSPECTING THE SEAL-TIGHTNESS OF SEALED PRODUCTS

(30) Priorité: 07.04.2023 FR 2303531
(43) Date de publication de la demande: 11.02.2026
(73) Titulaire: PFEIFFER VACUUM, 74000 Annecy (FR)
(72) Inventeur: PALISSON, Julien, 74009 Annecy Cedex (FR); BUNOD, Philippe, 74009 Annecy Cedex (FR)
(74) Mandataire: Innovincia
(86) Numéro de dépôt international: PCT/EP2024/052991
(87) Numéro de publication internationale: WO 2024/208466

(56) Documents cités:
- EP-B1- 2 875 328
- WO-A1-2022/079437
- GB-A- 1 262 920
- GB-A- 1 519 499

## Description

### Domaine technique de l'invention

La présente invention concerne un dispositif de détection pour le contrôle d'étanchéité de produits scellés tels que les produits pharmaceutiques, alimentaires, ou des produits issus de l'industrie des biotechnologies, de l'automobile, de l'horlogerie ou cosmétique. La présente invention concerne également un procédé de détection mis en oeuvre dans le dispositif.

### Arrière-plan technique

Certains produits tels que les plaquettes operculées, sachets, flacons, poches, sacs pharmaceutiques ou médicaux, seringues, sont scellés dans un emballage à pression atmosphérique ou sous vide, pour conserver leur intégrité.

Pour s'assurer que le scellement soit parfaitement étanche, on teste l'étanchéité du produit scellé. Le test doit avoir une bonne sensibilité pour garantir que le scellement ait une bonne étanchéité pour différents types de produits, secs ou liquides, souples ou rigides, opaques ou transparents... Pour les industries pharmaceutique et agroalimentaire, ce test est essentiel pour assurer la stabilité du médicament ou du produit alimentaire en le protégeant de l'humidité, de l'air et des bactéries.

Il existe plusieurs méthodes pour contrôler l'étanchéité des produits scellés.

On connait du document EP2875328B1 une méthode de détection pour le contrôle d'étanchéité de produits scellés dans lequel on place au moins un produit qui a été scellé au préalable sous atmosphère d'air, d'azote, ou d'argon, dans une enceinte, on abaisse la pression dans l'enceinte à une pression de vide secondaire par une pompe à vide turbomoléculaire et, tout en poursuivant le pompage sous vide secondaire dans l'enceinte, on ionise les gaz contenus dans l'enceinte pour surveiller l'évolution dans l'enceinte de la concentration d'au moins une espèce gazeuse ionisée du volume gazeux contenu dans le produit scellé parmi l'azote, l'oxygène ou l'argon, par analyse par spectrométrie d'émission optique ou de masse. Le procédé de détection utilise le fait que les produits scellés contiennent une atmosphère gazeuse emprisonnée entre l'élément à protéger et l'emballage. La recherche dans l'enceinte des espèces gazeuses contenues dans ce volume gazeux permet donc d'identifier la présence d'une fuite du produit scellé. Il n'est alors plus nécessaire de percer et reboucher l'emballage pour le remplir de gaz traceur. Aucune étape particulière n'est nécessaire entre le scellement du produit en production, le contrôle d'étanchéité et la mise en commercialisation du produit scellé sans fuites.

Certaines industries requièrent cependant des niveaux de sensibilité très élevés pour détecter des fuites particulièrement faibles, notamment inférieures à 0,5µm, soit 4.10⁻⁵ mbar.l/s, soit 4.10⁻⁶ Pa.m³/s, voire 0,2µm, soit 6.10⁻⁶ mbar.l/s, soit 6.10⁻⁷ Pa.m³/s, en particulier dans l'industrie pharmaceutique pour garantir le seuil de stérilité. Il est alors indispensable d'abaisser le bruit de fond de la méthode de test afin d'avoir une sensibilité suffisante.

Lorsque l'azote est l'espèce gazeuse dont l'évolution dans l'enceinte est surveillée, le signal d'azote mesuré peut provenir d'une fuite du produit scellé que l'on cherche à déceler mais aussi du dégazage des parois, notamment des parois de l'enceinte, des parois du produit scellé, voire des parois de la chambre du détecteur et de la ligne de vide du fait de leur mise en communication ponctuelle avec l'enceinte, à pression intermédiaire. Il est possible d'abaisser ce bruit de fond en attendant un long moment en pompage maximum dit de vide limite. Cependant en vide limite, une autre source de bruit de fond d'azote parasite provient de la rétrodiffusion des gaz à travers la pompe à vide turbomoléculaire.

On cherche donc à réduire le bruit de fond en azote pouvant provenir du dégazage des parois ou de la rétrodiffusion à travers la pompe à vide pour réaliser une détection sensible. Toutefois, en-dessous d'une pression trop basse, il n'est plus possible de maintenir un plasma allumé dans la chambre du détecteur sur une durée suffisamment longue pour réaliser un test d'étanchéité.

### Résumé de l'invention

Un but de la présente invention est de pallier cet inconvénient au moins partiellement en proposant un dispositif et un procédé de détection de fuites de haute sensibilité de produits scellés sous une atmosphère contenant de l'azote, notamment pour répondre aux standards pharmaceutiques.

A cet effet, l'invention a pour objet un dispositif de détection pour le contrôle d'étanchéité de produits scellés comportant :
- une enceinte configurée pour recevoir au moins un produit qui a été scellé sous une atmosphère contenant de l'azote,
- une pompe à vide turbomoléculaire,
- une jauge de gaz ionisés,
caractérisé en que le dispositif de détection comporte en outre :
- un volume tampon fluidiquement raccordé à une chambre de la jauge de gaz ionisés,
- une vanne d'isolation interposée entre l'enceinte et le volume tampon, et configurée pour mettre en communication ou isoler le volume tampon avec l'enceinte,
- une restriction à conductance variable interposée entre l'entrée de la pompe à vide turbomoléculaire et le volume tampon, la restriction à conductance variable présentant une ouverture variable,
- un dispositif d'injection de gaz configuré pour injecter un débit variable de gaz de substitution distinct de l'azote dans l'enceinte contenant le produit scellé, et
- une unité de contrôle configurée pour contrôler l'ouverture variable de la restriction à conductance variable et/ou le débit du dispositif d'injection de gaz en fonction d'un paramètre de contrôle de la jauge de gaz ionisés afin d'allumer ou maintenir un plasma dans la chambre.

L'injection de gaz de substitution dans l'enceinte combinée à la réduction de flux à l'aspiration de la pompe à vide turbomoléculaire permettent d'adapter la pression dans l'enceinte et donc dans la chambre de la jauge de gaz ionisés pour atteindre une pression de test compatible avec la génération et le maintien d'un plasma. La pression obtenue est ainsi la plus basse possible pour l'allumage et le maintien d'un plasma, ce qui permet d'obtenir un test de sensibilité élevée. L'injection continue de gaz de substitution dans l'enceinte permet en outre d'empêcher la rétrodiffusion d'azote dans l'enceinte à travers la pompe à vide turbomoléculaire en orientant le flux vers le refoulement de la pompe à vide turbomoléculaire. La restriction à conductance variable permet de réduire le flux de pompage pour augmenter la pression tout en conservant le taux de compression élevé de la pompe à vide turbomoléculaire, ce qui permet également d'empêcher la rétrodiffusion d'espèces gazeuses à travers la pompe à vide turbomoléculaire. Également, cela permet d'injecter moins de gaz de substitution au cours du test, ce qui évite d'écraser le signal d'azote avec celui du gaz de substitution. Par ailleurs, la conductance variable de la restriction permet d'augmenter la conductance pour un pompage rapide de l'enceinte depuis la pression atmosphérique.

Le dispositif de détection peut en outre comporter une ou plusieurs des caractéristiques décrites ci-après, prise seule ou en combinaison.

Le dispositif de détection comporte une unité de contrôle.

L'unité de contrôle est configurée pour contrôler l'ouverture variable de la restriction à conductance variable en fonction d'un paramètre de contrôle de la jauge de gaz ionisés afin d'allumer ou maintenir un plasma dans la chambre.

L'unité de contrôle est configurée pour contrôler le débit du dispositif d'injection de gaz en fonction d'un paramètre de contrôle de la jauge de gaz ionisés afin d'allumer ou maintenir un plasma dans la chambre.

La restriction à conductance variable comporte par exemple un diaphragme.

Le paramètre de contrôle de la jauge de gaz ionisés est par exemple la tension d'un générateur d'un dispositif de génération d'un plasma de la jauge de gaz ionisés.

Selon un exemple de réalisation, la jauge de gaz ionisés comporte :
- une chambre,
- un dispositif de génération d'un plasma configuré pour générer un plasma dans la chambre,
- un spectromètre d'émission optique,
- une fenêtre optique permettant l'analyse de la lumière émise par le plasma par le spectromètre d'émission optique.

Selon un exemple de réalisation, la jauge de gaz ionisés comporte un dispositif de génération de plasma comprenant :
- une cathode comportant une paroi cylindrique reliée à au moins un disque présentant un trou central et au moins deux trous périphériques,
- une anode rectiligne agencée au centre de la cathode et traversant les disques de la cathode,
- au moins un aimant torique entourant la chambre, et
- un générateur connecté à la cathode et l'anode.

Le dispositif de détection peut comporter une fuite calibrée raccordée à l'enceinte comportant un capillaire et une vanne d'isolation interposés entre un distributeur d'azote et l'enceinte.

L'invention a aussi pour objet un procédé de détection pour le contrôle d'étanchéité de produits scellés dans un dispositif de détection tel que décrit précédemment, comportant les étapes suivantes :
- dans une première étape, on place au moins un produit qui a été scellé au préalable sous une atmosphère contenant de l'azote, dans l'enceinte,
- dans une deuxième étape, on ouvre la vanne d'isolation de manière à mettre l'enceinte en communication avec le volume tampon sous vide,
- dans une troisième étape, on injecte de manière continue un gaz de substitution distinct de l'azote dans l'enceinte et, tout en poursuivant le pompage sous vide secondaire dans l'enceinte, on ionise les gaz contenus dans l'enceinte au moyen de la jauge de gaz ionisés pour surveiller l'évolution dans l'enceinte de la concentration d'azote par analyse par spectrométrie d'émission optique et identifier la présence d'une fuite dudit produit scellé, l'ouverture de la restriction à conductance variable et le débit du dispositif d'injection de gaz étant contrôlés de manière à générer et maintenir un plasma allumé dans la chambre de la jauge de gaz ionisés.

Selon un exemple de réalisation, dans la deuxième étape, l'ouverture de la restriction à conductance variable est maximum et le débit du dispositif d'injection de gaz est minimum.

Selon un exemple de réalisation, dans la troisième étape, au fur et à mesure de la descente en pression dans l'enceinte, on réduit d'abord l'ouverture de la restriction à conductance variable avant d'augmenter le débit du dispositif d'injection de gaz pour maintenir le plasma allumé.

Le procédé de détection peut comporter une quatrième étape dans laquelle on ferme la vanne d'isolation tout en poursuivant l'injection du gaz de substitution pour le retour à la pression atmosphérique dans l'enceinte.

On peut également injecter un gaz de substitution dans l'enceinte afin de balayer les parois de l'enceinte de gaz de substitution au cours de la première étape.

Le gaz de substitution est par exemple choisi parmi l'argon, le xénon, l'hélium, le dioxyde de carbone, le krypton et le néon.

Selon un exemple de réalisation, on réalise un test d'étalonnage avec un produit scellé intègre contenu dans l'enceinte dans laquelle on injecte un débit connu d'azote via une fuite calibrée du dispositif de détection.

### Brève description des figures

D'autres caractéristiques et avantages de l'invention ressortiront de la description suivante, donnée à titre d'exemple, sans caractère limitatif, en regard des dessins annexés sur lesquels:
[Fig. 1] La figure 1 est une vue schématique d'un dispositif de détection pour le contrôle d'étanchéité de produits scellés.
[Fig. 2A] La figure 2A est une vue schématique de face d'un exemple de réalisation d'une restriction à conductance variable du dispositif de détection de la figure 1 avec une ouverture maximum.
[Fig. 2B] La figure 2B est une vue similaire à la figure 2A avec une ouverture partiellement fermée.
[Fig. 3] La figure 3 est une vue schématique en coupe d'éléments d'un exemple de réalisation d'une jauge de gaz ionisés du dispositif de détection.
[Fig. 4] La figure 4 montre un diagramme des étapes d'un procédé de détection mis en oeuvre dans le dispositif de détection.
[Fig. 5A] La figure 5A montre un exemple de spectre obtenu pour un test d'étanchéité d'un produit scellé sans gaz de substitution.
[Fig. 5B] La figure 5B montre un autre exemple de spectre obtenu pour un test d'étanchéité d'un produit scellé pour lequel le gaz de substitution est l'argon.

Sur ces figures, les éléments identiques portent les mêmes numéros de référence.

### Description détaillée

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

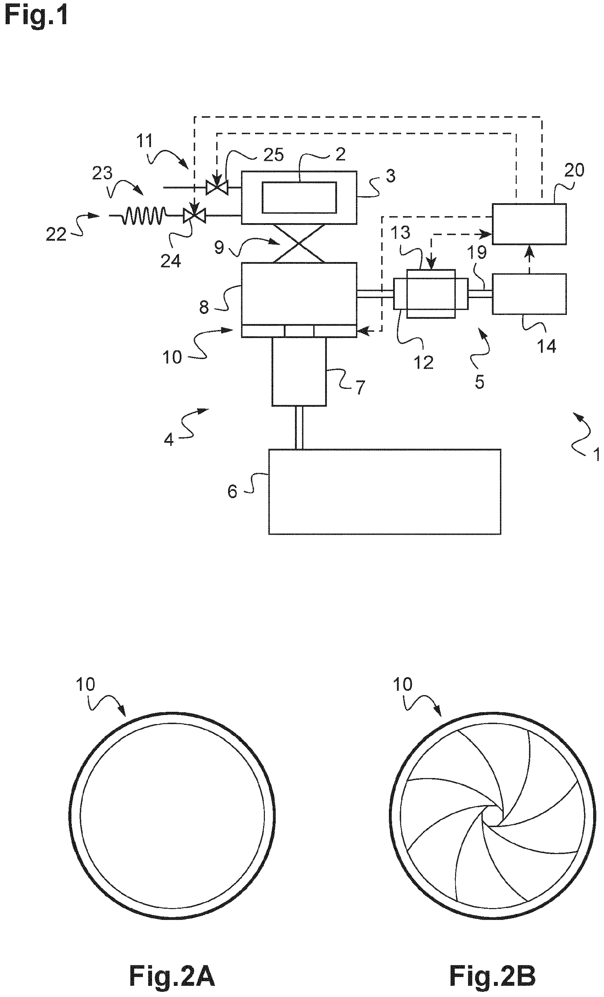

La figure 1 représente un dispositif de détection 1 pour le contrôle d'étanchéité de produits scellés 2.

Les produits scellés 2 sont par exemple des produits pharmaceutiques ou alimentaires, tels que des plaquettes operculées, des sachets, flacons, poches, sacs pharmaceutiques ou médicaux, seringues. Les produits scellés 2 peuvent également être des produits issus de l'industrie des biotechnologies, de l'horlogerie ou de l'industrie automobile.

Ces produits contiennent au moins un élément à protéger, par exemple de l'humidité, de l'air ou des bactéries, tel qu'un médicament ou une denrée alimentaire. L'élément à protéger peut se présenter sous forme liquide ou solide. Il est empaqueté dans un emballage scellé. Un scellement intègre garantit que l'accès à l'intérieur de l'emballage est impossible, aucun gaz ne peut entrer ou sortir de l'emballage.

Le produit scellé 2 contient de l'azote ou un mélange de gaz contenant de l'azote comme de l'air, entre l'élément à protéger et son emballage. La pression du volume gazeux contenu dans le produit scellé 2 est donc constante. Ce peut être la pression atmosphérique ou une pression subatmosphérique pour des emballages dits « sous vide », suivant leur conditionnement. Ce peut également être un réservoir en surpression type airbag ou autre.

Le dispositif de détection 1 comporte une enceinte 3 configurée pour recevoir au moins un produit qui a été scellé 2 sous une atmosphère contenant de l'azote, un groupe de pompage 4 et une jauge de gaz ionisés 5.

L'enceinte 3 présente un volume qui peut contenir un ou plusieurs produits scellés 2 et qui présente des dimensions légèrement supérieures au volume du ou des produits scellés 2 à tester, de manière à limiter au maximum l'absorption des gaz par les surfaces de l'enceinte 3 lorsque celle-ci est à pression atmosphérique pour le chargement/déchargement du produit scellé 2. On limite ainsi le dégazage des parois de l'enceinte 3 à basse pression qui pourrait augmenter le bruit de fond. De plus, un volume juste un peu plus grand que le volume du produit scellé 2 permet d'abaisser plus rapidement la pression dans l'enceinte 3 et donc d'améliorer le temps de réponse et la sensibilité de la mesure, le volume de mesure étant égal au volume de l'enceinte 3 à laquelle on a soustrait le volume du produit scellé 2.

L'enceinte 3 est adaptée pour pouvoir être mise sous vide par le groupe de pompage 4.

Le groupe de pompage 4 comporte une pompe à vide primaire 6 et une pompe à vide turbomoléculaire 7 qui sont fluidiquement raccordées en série, l'entrée de la pompe à vide primaire 6 étant fluidiquement raccordée à la sortie de la pompe à vide turbomoléculaire 7. La pompe à vide turbomoléculaire 7 est configurée pour fournir un vide secondaire dans l'enceinte 3 en vide limite, c'est à dire sans injection de gaz, inférieure ou égale à 10⁻⁵ mbar (10⁻³Pa), telle que comprise entre 10⁻⁵mbar (10⁻³Pa) et 10⁻⁷mbar (10⁻⁵Pa).

Le dispositif de détection 1 comporte en outre un volume tampon 8, une vanne d'isolation 9 interposée entre l'enceinte 3 et le volume tampon 8, une restriction à conductance variable 10 interposée entre l'entrée de la pompe à vide turbomoléculaire 7 et le volume tampon 8 et un dispositif d'injection de gaz 11 configuré pour injecter un débit variable de gaz de substitution distinct de l'azote dans l'enceinte 3 contenant le produit scellé 2.

La restriction à conductance variable 10 présente une ouverture variable, ce qui permet de réduire la conductance entre le volume tampon 8 et la pompe à vide turbomoléculaire 7, c'est à dire la dimension du passage des gaz entre la pompe à vide turbomoléculaire 7 et le volume tampon 8, tout en permettant le pompage continu du volume tampon 8 par la pompe à vide turbomoléculaire 7.

La restriction à conductance variable 10 comporte par exemple un diaphragme. Le diaphragme peut être par exemple totalement ouvert (figure 2A) ou partiellement fermé (figure 2B) avec plusieurs degrés de fermeture possibles. La variation de dimension de l'ouverture est par exemple continue.

La vanne d'isolation 9 peut être soit ouverte de manière à mettre en communication le volume tampon 8 avec l'enceinte 3 et ainsi mettre l'enceinte 3 sous vide au moyen du volume tampon 8, soit fermée de manière à isoler le volume tampon 8 de l'enceinte 3, notamment pour ouvrir l'enceinte 3 sur la pression atmosphérique pour le déchargement et chargement de produits scellés 2 à tester et dans le même temps, abaisser la pression dans le volume tampon 8 au moyen de la pompe à vide turbomoléculaire 6.

Le volume tampon 8 est ainsi continuellement mis sous vide par la pompe à vide turbomoléculaire 7. La pression du volume tampon 8 ne remonte pas à la pression atmosphérique, ce qui permet d'éviter l'absorption des gaz par les surfaces. Le volume tampon 8 est par exemple compris entre 0,5dm³ et 2dm³, tel que 1dm³.

Le dispositif d'injection de gaz de substitution 11 est configuré pour injecter un débit variable de gaz de substitution distinct de l'azote dans l'enceinte 3 contenant le produit scellé 2 et comporte par exemple pour cela un contrôleur de débit 25.

Le gaz de substitution est injecté dans l'enceinte 3 d'une part au cours du test permettant d'identifier la présence d'une fuite du produit scellé 2 et éventuellement, pour le retour à la pression atmosphérique de l'enceinte 3 et comme on le verra plus loin pour le balayage de l'enceinte 3 à pression atmosphérique lors du chargement/déchargement de produits scellés 2 à tester. Alternativement, une ligne d'injection de gaz additionnelle spécifique est utilisée pour le retour à la pression atmosphérique et/ou pour le balayage de l'enceinte 3 à pression atmosphérique.

Le gaz de substitution est un gaz distinct de l'azote afin d'éviter toute confusion avec l'azote contenu dans le produit scellé 2.

Le gaz de substitution est par exemple de l'argon. L'argon présente l'avantage de faciliter l'interprétation du spectre, notamment car les raies spectrales de l'argon sont éloignées des raies spectrales de l'azote. De plus, c'est un gaz neutre, facilement disponible, peu onéreux et il permet de faciliter l'amorçage d'un plasma. Selon d'autres exemples, le gaz de substitution est du xénon, de l'hélium, du dioxyde de carbone, du krypton ou du néon. Le gaz de substitution peut également comporter un mélange de gaz distincts de l'azote.

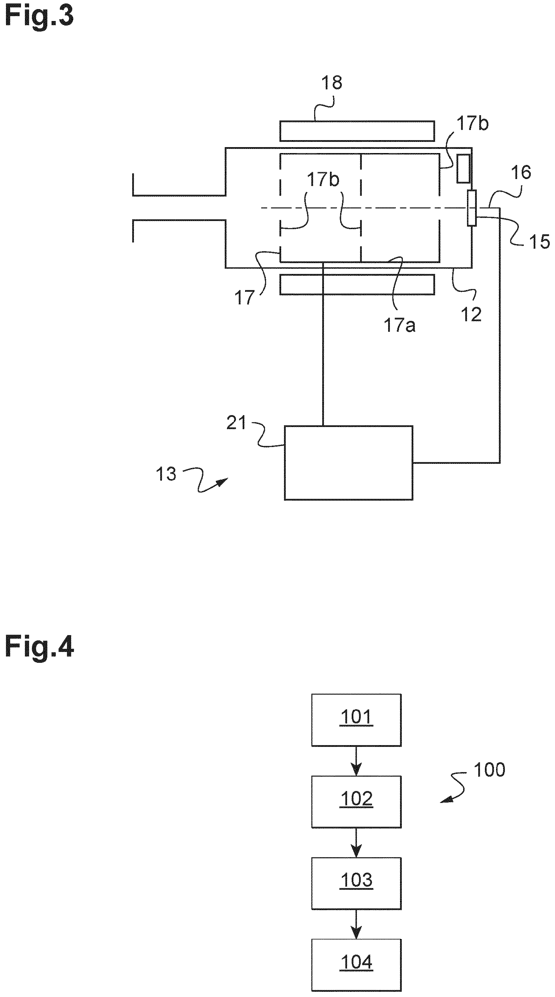

Comme mieux visible sur les figures 1 et 3, selon un exemple de réalisation, la jauge de gaz ionisés 5 comporte une chambre 12 fluidiquement raccordée au volume tampon 8, un dispositif de génération d'un plasma 13 configuré pour générer un plasma dans la chambre 12, un spectromètre d'émission optique 14, configuré pour fournir un spectre à partir de la lumière émise par le plasma et une fenêtre optique 15, telle qu'un hublot transparent, permettant l'analyse de la lumière émise par le plasma par le spectromètre d'émission optique 14.

La chambre 12 raccordée au volume tampon 8 par son extrémité ouverte peut ainsi être mise sous vide en continu grâce au volume tampon 8.

Selon un exemple de réalisation, le dispositif de génération de plasma 13 de la jauge de gaz ionisés 5 comporte une anode 16 (pôle +) et une cathode 17 (pôle -) respectivement connectées aux pôles positif et négatif d'un générateur 21 (figure 3). La cathode 17 comporte une paroi cylindrique 17a reliée à au moins un disque 17b, par exemple trois répartis le long de l'axe de la paroi cylindrique 17a, présentant chacun un trou central dans lequel passe l'anode 16 et pouvant présenter au moins deux trous périphériques, par exemple six régulièrement répartis autour du trou central. L'anode 16 rectiligne est agencée au centre de la cathode 17 avec laquelle elle est isolée et traverse les disques 17b de la cathode 17.

Le générateur 21 du dispositif de génération de plasma 13 est configuré pour appliquer entre l'anode 16 (chargée positivement) et la cathode 17 (chargée négativement) une forte différence de potentiel, par exemple supérieure ou égale à 3000 Volts qui génère un champ électrique E radial. En pratique, le générateur 21 fournit par exemple un courant fixe, la tension étant un paramètre de contrôle variable qui dépend notamment de la pression dans la chambre 12 de la jauge de gaz ionisés 5.

Ce champ E permet de créer un plasma par génération et accélération d'un flux d'électrons de la cathode 17 vers l'anode 16 afin d'exciter et ioniser les molécules gazeuses provenant de l'enceinte 3. Pour obtenir un plasma exploitable, on lui adjoint un champ magnétique B d'intensité constante, environ 100 mT, et de direction donnée, dont les lignes de champ sont perpendiculaires au champ électrique E et parallèles à l'anode 16. Le champ magnétique B est généré par au moins un aimant 18 torique permanent entourant la chambre 12. La présence d'un champ magnétique B couplé au champ électrique E permet d'augmenter fortement l'excitation des molécules de gaz du plasma.

Ainsi un plasma peut être généré à l'intérieur de cette chambre 12 par le dispositif de génération de plasma 13 afin de pouvoir analyser les espèces gazeuses présentes dans l'enceinte 3. Le plasma généré sur les espèces gazeuses émet de la lumière provenant de la désexcitation des molécules caractéristiques des gaz présents. La lumière qui traverse la fenêtre optique 15 est recueillie par exemple par un système collecteur optique et analysée spectralement par le spectromètre d'émission optique 14 reliés optiquement par exemple par une fibre 19 qui transporte la lumière du collecteur optique vers le spectromètre 14 (figure 1).

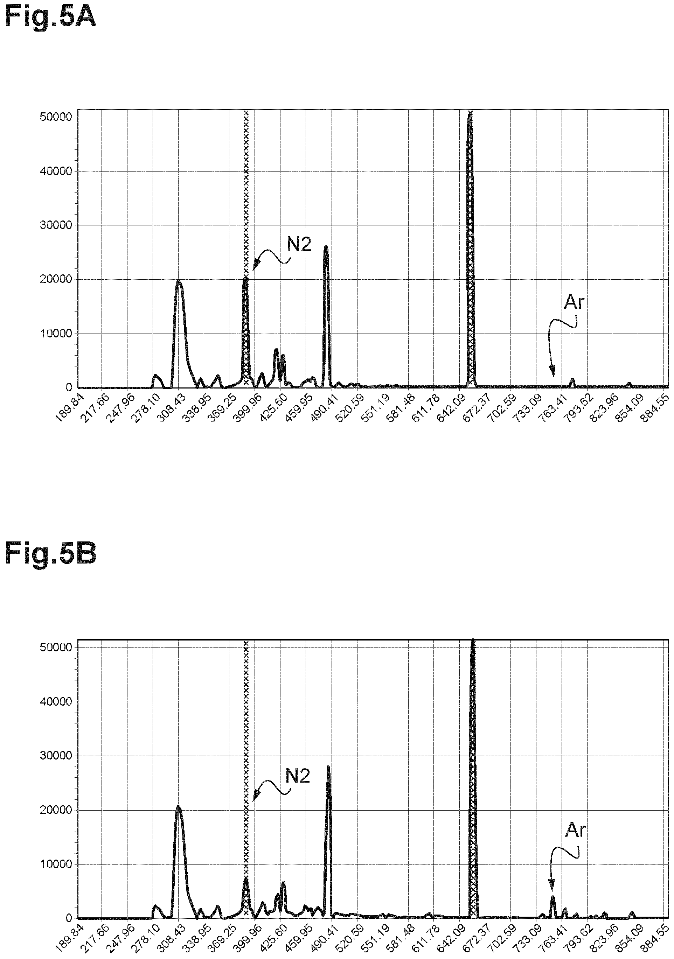

En spectrométrie par émission optique, les molécules chargées (ions) sont séparées en fonction de la longueur d'onde à laquelle elles émettent. L'amplitude d'un pic du spectre (ou raie spectrale) correspond à l'abondance relative d'un fragment de molécule. Le spectromètre 14 établit le spectre caractéristique des espèces gazeuses présentes dans la chambre 12. Les longueurs d'ondes des raies du spectre optique ainsi obtenu sont caractéristiques des espèces gazeuses présentes dans l'enceinte 3 (figures 5A, 5B).

Le procédé de détection utilise le fait que les produits scellés 2 contiennent une atmosphère gazeuse contenant de l'azote emprisonnée entre l'élément à protéger et l'emballage. Le suivi de l'évolution d'azote permet donc d'identifier la présence d'une fuite du produit scellé 2. Une fuite est détectée par exemple en comparant au moins une raie d'azote du spectre obtenu avec une raie d'azote d'un spectre d'un produit scellé 2 de référence, c'est-à-dire exempt de fuites ou en constatant la présence d'une raie d'azote, notamment par exemple en comparant l'amplitude de la raie d'azote dans le spectre obtenu avec un seuil maximal à ne pas dépasser pour que le produit scellé soit considéré comme intègre.

Le dispositif de détection 1 peut également comporter une fuite calibrée 22 raccordée à l'enceinte 3 (figure 1). On entend par fuite calibrée, une fuite dont on connaît les caractéristiques. La fuite calibrée peut être utilisée pour obtenir le spectre d'un produit scellé 2 de référence.

Pour ce faire, on réalise un test d'étalonnage avec un produit scellé 2 intègre contenu dans l'enceinte 3 dans laquelle on injecte un débit connu d'azote via la fuite calibrée 22.

Selon un exemple de réalisation, la fuite calibrée 22 comporte un capillaire 23 et une vanne d'isolation 24 interposés entre un distributeur d'azote et l'enceinte 3. Le capillaire 23 permet la délivrance d'un débit constant et connu d'azote. Le produit scellé 2 intègre contenu dans l'enceinte 3 au moment de cette mesure permet d'ajouter la source de dégazage issue des parois du produit scellé 2 au signal de référence.

Le dispositif de détection 1 peut comporter une unité de contrôle 20, telle qu'un ordinateur, automate ou contrôleur, connectée au spectromètre d'émission optique 14 pour recevoir de ce dernier, des signaux représentatifs de l'évolution des espèces gazeuses ionisées dans la chambre 12 et pour identifier si une longueur d'onde caractéristique de l'azote est présente dans le spectre pour identifier une fuite.

Selon un exemple de réalisation, l'unité de contrôle 20 est configurée pour contrôler l'ouverture variable de la restriction à conductance variable 10 et/ou le débit du dispositif d'injection de gaz 11 en fonction d'un paramètre de contrôle de la jauge de gaz ionisés 5 afin d'allumer ou maintenir un plasma dans la chambre 12.

Le paramètre de contrôle de la jauge de gaz ionisés 5 est par exemple la tension du générateur du dispositif de génération d'un plasma 13.

L'unité de contrôle 20 peut également être configurée pour contrôler la vanne d'isolation 24 de la fuite calibrée 22 le cas échéant.

En fonctionnement, le procédé de détection 100 pour le contrôle d'étanchéité de produits scellés 2 dans le dispositif de détection 1 comporte les étapes suivantes (figure 4).

On considère que la vanne d'isolation 9 est initialement fermée, l'enceinte 3 étant isolée du volume tampon 8, le volume tampon 8 étant mis sous vide par la pompe à vide turbomoléculaire 7 dont le refoulement est maintenu sous vide primaire par la pompe à vide primaire 6.

Dans une première étape 101, on place au moins un produit qui a été scellé 2 au préalable sous une atmosphère contenant de l'azote, par exemple qui a été scellé sous air ou sous azote, dans l'enceinte 3. Cette première étape 101 est réalisée à la pression de l'atmosphère régnant à l'extérieur de l'enceinte 3, par exemple la pression atmosphérique.

Selon un exemple de réalisation, on injecte un gaz de substitution dans l'enceinte 3 au cours de la première étape 101 afin de balayer les parois de l'enceinte 3 de gaz de substitution. Ce balayage des parois par un gaz de substitution alors que l'on ouvre l'enceinte 3 pour le déchargement/chargement d'un produit scellé 2 à tester permet d'éviter que les parois de l'enceinte 3 puissent se charger d'espèces gazeuses provenant de l'air ambient et augmentent le bruit de fond lorsque l'enceinte 3 est mise sous vide. Puis, on ferme l'enceinte 3.

Dans une deuxième étape 102, on ouvre la vanne d'isolation 9 de manière à mettre l'enceinte 3 en communication avec le volume tampon 8 sous vide, ce qui abaisse la pression dans l'enceinte 3 et dans la chambre 12 de la jauge de gaz ionisés 5. L'ouverture de la restriction à conductance variable 10 est par exemple maximum et le débit du dispositif d'injection de gaz 11 est par exemple minimum. Le vide secondaire obtenu (ou pression de test) est par exemple compris entre 10⁻²mbars (1Pa) et 10⁻⁷mbars (10⁻⁵Pa).

La restriction à conductance variable 10 permet d'augmenter le débit de pompage pour obtenir la pression de test dans l'enceinte 3 rapidement au cours de la première étape 101 et ceci pour différents taux de dégazage de produits scellés. En effet la conductance variable agencée devant la pompe à vide turbomoléculaire 7 permet d'augmenter la section de passage et donc la conductance afin d'abaisser au plus vite la pression depuis la pression atmosphérique après le chargement d'un produit scellé 2 et de conserver ce pompage maximum jusqu'à la fin du dégazage. La durée de dégazage peut alors être adaptée selon le taux de dégazage du produit scellé 2 afin d'éviter qu'elle ne prenne plusieurs heures par exemple pour des contenants dégazant beaucoup, tels que ceux en matériau plastique.

Dans une troisième étape 103, on injecte de manière continue un gaz de substitution distinct de l'azote dans l'enceinte 3 au moyen du dispositif d'injection de gaz de substitution 11, par exemple avec un débit initial de 10⁻³ mbar.l/s, soit 10⁻⁴ Pa.m³/s et, tout en poursuivant le pompage sous vide secondaire dans l'enceinte 3, on ionise les gaz contenus dans l'enceinte 3 au moyen de la jauge de gaz ionisés 5 pour surveiller l'évolution dans l'enceinte 3 de la concentration d'azote par analyse par spectrométrie d'émission optique et identifier la présence d'une fuite dudit produit scellé 2.

L'ouverture de la restriction à conductance variable 10 et le débit du dispositif d'injection de gaz 11 sont contrôlés de manière à pouvoir générer et maintenir un plasma allumé dans la chambre 12 de la jauge de gaz ionisés 5.

L'injection continue de gaz de substitution dans l'enceinte 3 combinée à la réduction de flux 10 à l'aspiration de la pompe à vide turbomoléculaire 7 permettent d'adapter la pression des gaz à l'intérieur de l'enceinte 3 et donc dans la chambre 12 de la jauge de gaz ionisés 5, pour atteindre des pressions de test compatibles avec la génération et le maintien d'un plasma dans la chambre 12.

L'injection continue de gaz de substitution dans l'enceinte 3 permet d'empêcher la rétrodiffusion d'azote dans l'enceinte 3 à travers la pompe à vide turbomoléculaire 7 en orientant le flux vers le refoulement de la pompe à vide turbomoléculaire 7.

La restriction à conductance variable 10 permet de réduire le flux de pompage tout en conservant le taux de compression élevé de la pompe à vide turbomoléculaire 7, ce qui permet également d'empêcher la rétrodiffusion d'espèces gazeuses à travers la pompe à vide turbomoléculaire 7. De plus, la réduction du flux de pompage par rapport au pompage maximum de mise sous vide, permet d'injecter moins de gaz de substitution pour parvenir aux pressions de test souhaitées. L'injection moindre de gaz de substitution permet de ne pas écraser le signal d'azote avec celui du gaz de substitution. En effet, une plus petite puissance est nécessaire pour le générateur 21 du dispositif de génération d'un plasma 13, ce qui rend visible le signal de pression partielle d'azote.

La pression obtenue est ainsi la plus basse possible pour le maintien d'un plasma, ce qui permet d'obtenir une sensibilité élevée.

En pratique par exemple pour maintenir le plasma allumé, on cherche à maintenir un courant constant. Pour cela par exemple, au fur et à mesure de la descente en pression dans l'enceinte 3, on commence par augmenter la tension du générateur 21 du dispositif de génération d'un plasma 13. Lorsque cette tension atteint un maximum, par exemple 5000 Volts, on réduit d'abord l'ouverture de la restriction à conductance variable 10 avant d'augmenter le débit du dispositif d'injection de gaz 11. Le débit peut par exemple être augmenté jusqu'à 101 mbar.l/s, soit 1 Pa.m³/s.

Après avoir réalisé le contrôle d'étanchéité, dans une quatrième étape 104, on ferme la vanne d'isolation 9 par exemple tout en poursuivant l'injection du gaz de substitution pour le retour à la pression atmosphérique dans l'enceinte 3. Le gaz de substitution injecté permet de saturer les parois internes de l'enceinte 3 et de la chambre 12 de la jauge de gaz ionisés 5, ce qui permet de réduire le taux d'adsorption des parois par l'air ambient, et notamment par l'azote, et par conséquent, de réduire le temps nécessaire au dégazage entre deux mesures et donc le temps de cycle.

Les graphiques représentés sur les figures 5A et 5B montrent deux exemples de spectres obtenus par mesure par spectroscopie d'émission optique pour le contrôle d'étanchéité d'emballages de produits scellés 2 intègres par surveillance de l'amplitude du pic d'une raie d'azote contenu dans l'enceinte 3, également présent dans le produit scellé 2.

Sur le spectre de la figure 5B où l'argon est le gaz de substitution, l'amplitude de la raie spectrale surveillée d'azote (autour de 389nm) est plus faible que sur le spectre de la figure 5A sans gaz de substitution. Le gaz de substitution permet donc de réduire le bruit de fond d'azote. Par ailleurs, l'augmentation des amplitudes des raies spectrales d'argon dans le spectre de la figure 5B du fait que le gaz de substitution est de l'argon, ne constitue pas une gêne pour le suivi de la raie d'azote car les raies d'argon sont éloignées de la raie d'azote suivie.

On comprend donc que le dispositif de détection 1 permet de réaliser une détection de fuites de haute sensibilité de produits scellés 2 répondant notamment aux standards pharmaceutiques.

## Revendications

1. Dispositif de détection (1) pour le contrôle d'étanchéité de produits scellés (2) comportant :
- une enceinte (3) configurée pour recevoir au moins un produit qui a été scellé (2) sous une atmosphère contenant de l'azote,
- une pompe à vide turbomoléculaire (7),
- une jauge de gaz ionisés (5),
- un volume tampon (8) fluidiquement raccordé à une chambre (12) de la jauge de gaz ionisés (5),
- une vanne d'isolation (9) interposée entre l'enceinte (3) et le volume tampon (8) et configurée pour mettre en communication ou isoler le volume tampon (8) avec l'enceinte (3),
- un dispositif d'injection de gaz (11) configuré pour injecter un débit variable de gaz de substitution distinct de l'azote dans l'enceinte (3) contenant le produit scellé (2), caractérisé en que le dispositif de détection (1) comporte en outre:
- une restriction à conductance variable (10) interposée entre l'entrée de la pompe 15 à vide turbomoléculaire (7) et le volume tampon (8), la restriction à conductance variable (10) présentant une ouverture variable, et
- une unité de contrôle (20) configurée pour contrôler l'ouverture variable de la restriction à conductance variable (10) et/ou le débit du dispositif d'injection de gaz (11) en fonction d'un paramètre de contrôle de la jauge de gaz ionisés (5) afin d'allumer ou maintenir un plasma dans la chambre (12).

2. Dispositif de détection (1) selon la revendication précédente, **caractérisé en ce que** le paramètre de contrôle de la jauge de gaz ionisés (5) est la tension d'un générateur d'un dispositif de génération d'un plasma (13).

3. Dispositif de détection (1) selon l'une des revendications précédentes, **caractérisé en ce que** la restriction à conductance variable (10) comporte un diaphragme.

4. Dispositif de détection (1) selon l'une des revendications précédentes, **caractérisé en ce que** la jauge de gaz ionisés (5) comporte :
- une chambre (12),
- un dispositif de génération d'un plasma (13) configuré pour générer un plasma dans la chambre (12),
- un spectromètre d'émission optique (14),
- une fenêtre optique (15) permettant l'analyse de la lumière émise par le plasma par le spectromètre d'émission optique (14).

5. Dispositif de détection (1) selon la revendication précédente, **caractérisé en ce que** le dispositif de génération de plasma (13) comporte:
- une cathode (17) comportant une paroi cylindrique (17a) reliée à au moins un disque (17b) présentant un trou central et au moins deux trous périphériques,
- une anode (16) rectiligne agencée au centre de la cathode (17) et traversant les disques (17b) de la cathode (17),
- au moins un aimant (18) torique entourant la chambre (12), et
- un générateur (21) connecté à la cathode (17) et l'anode (16).

6. Dispositif de détection (1) selon l'une des revendications précédentes, **caractérisé en ce que** le dispositif de détection (1) comporte une fuite calibrée (22) raccordée à l'enceinte (3) comportant un capillaire (23) et une vanne d'isolation (24) interposés entre un distributeur d'azote et l'enceinte (3).

7. Procédé de détection (100) pour le contrôle d'étanchéité de produits scellés dans un dispositif de détection (1) selon l'une des revendications précédentes, **caractérisé en ce qu'**il comporte les étapes suivantes :
- dans une première étape (101), on place au moins un produit qui a été scellé (2) au préalable sous une atmosphère contenant de l'azote, dans l'enceinte (3),
- dans une deuxième étape (102), on ouvre la vanne d'isolation (9) de manière à mettre l'enceinte (3) en communication avec le volume tampon (8) sous vide (102),
- dans une troisième étape (103), on injecte de manière continue un gaz de substitution distinct de l'azote dans l'enceinte et, tout en poursuivant le pompage sous vide secondaire dans l'enceinte (3), on ionise les gaz contenus dans l'enceinte (3) au moyen de la jauge de gaz ionisés (5) pour surveiller l'évolution dans l'enceinte (3) de la concentration d'azote par analyse par spectrométrie d'émission optique et identifier la présence d'une fuite dudit produit scellé (2), l'ouverture de la restriction à conductance variable (10) et le débit du dispositif d'injection de gaz (11) étant contrôlés de manière à générer et maintenir un plasma allumé dans la chambre (12) de la jauge de gaz ionisés (5).

8. Procédé de détection (100) selon la revendication précédente, **caractérisé en ce que** dans la deuxième étape (102), l'ouverture de la restriction à conductance variable (10) est maximum et le débit du dispositif d'injection de gaz (11) est minimum.

9. Procédé de détection (100) selon la revendication précédente, **caractérisé en ce que** dans la troisième étape (103), au fur et à mesure de la descente en pression dans l'enceinte (3), on réduit d'abord l'ouverture de la restriction à conductance variable (10) avant d'augmenter le débit du dispositif d'injection de gaz (11) pour maintenir le plasma allumé.

10. Procédé de détection (100) selon l'une des revendications 7 à 9, **caractérisé en ce que** dans une quatrième étape (104), on ferme la vanne d'isolation (9) tout en poursuivant l'injection du gaz de substitution pour le retour à la pression atmosphérique dans l'enceinte (3).

11. Procédé de détection (100) selon l'une des revendications 7 à 10, **caractérisé en ce qu'**on injecte un gaz de substitution dans l'enceinte (3) afin de balayer les parois de l'enceinte (3) de gaz de substitution au cours de la première étape (101).

12. Procédé de détection (100) selon l'une des revendications 7 à 11, **caractérisé en ce que** le gaz de substitution est choisi parmi l'argon, le xénon, l'hélium, le dioxyde de carbone, le krypton et le néon.

13. Procédé de détection (100) selon l'une des revendications 7 à 12, **caractérisé en ce qu'**on réalise un test d'étalonnage avec un produit scellé (2) intègre contenu dans l'enceinte (3) dans laquelle on injecte un débit connu d'azote via une fuite calibrée (22) du dispositif de détection (1).

## Patentansprüche

1. Detektionsvorrichtung (1) für die Überprüfung der Dichtheit von versiegelten Produkten (2), aufweisend:
- ein Gehäuse (3), das ausgebildet ist für die Aufnahme mindestens eines Produkts (2), das unter einer stickstoffhaltigen Atmosphäre versiegelt wurde,
- eine Turbomolekular-Vakuumpumpe (7),
- ein Ionisations-Vakuummeter (5),
- ein Puffervolumen (8), das mit einer Kammer (12) des Ionisations-Vakuummeters (5) fluidisch verbunden ist,
- ein Absperrventil (9), das zwischen dem Gehäuse (3) und dem Puffervolumen (8) angeordnet und dazu ausgebildet ist, das Puffervolumen (8) mit dem Gehäuse (3) in Verbindung zu bringen oder zu trennen,
- eine Gasinjektionsvorrichtung (11), die dazu ausgebildet ist, einen variablen Volumenstrom eines von Stickstoff verschiedenen Ersatzgases in das das versiegelte Produkt (2) enthaltende Gehäuse (3) einzubringen, **dadurch gekennzeichnet, dass** die Detektionsvorrichtung (1) ferner aufweist:
- eine Drosseleinrichtung mit veränderlichem Leitwert (10), die zwischen dem Eingang der Turbomolekular-Vakuumpumpe (7) und dem Puffervolumen (8) angeordnet ist, wobei die Drosseleinrichtung mit veränderlichem Leitwert (10) eine variable Öffnung aufweist,
und
- eine Regeleinheit (20), die dazu ausgebildet ist, die variable Öffnung der Drosseleinrichtung mit veränderlichem Leitwert (10) und/oder den Volumenstrom der Gasinjektionsvorrichtung (11) in Abhängigkeit von einem Regelparameter des Ionisations-Vakuummeters (5) zu regeln, um ein Plasma in der Kammer (12) zu zünden oder aufrechtzuerhalten.

2. Detektionsvorrichtung (1) nach dem vorhergehenden Anspruch, **dadurch gekennzeichnet, dass** der Regelparameter des Ionisations-Vakuummeters (5) die Spannung eines Generators einer Plasmaerzeugungsvorrichtung (13) ist.

3. Detektionsvorrichtung (1) nach einem der vorhergehenden Ansprüche, **dadurch gekennzeichnet, dass** die Drosseleinrichtung mit veränderlichem Leitwert (10) eine Membran aufweist.

4. Detektionsvorrichtung (1) nach einem der vorhergehenden Ansprüche, **dadurch gekennzeichnet, dass** das Ionisations-Vakuummeter (5) aufweist:
- eine Kammer (12),
- eine Plasmaerzeugungsvorrichtung (13), die zum Erzeugen eines Plasmas in der Kammer (12) ausgebildet ist,
- ein optisches Emissionsspektrometer (14),
- ein optisches Fenster (15), das die Analyse des von dem Plasma emittierten Lichts durch das optische Emissionsspektrometer (14) gestattet.

5. Detektionsvorrichtung (1) nach dem vorhergehenden Anspruch, **dadurch gekennzeichnet, dass** die Plasmaerzeugungsvorrichtung (13) aufweist:
- eine Kathode (17) mit einer zylindrischen Wand (17a), die mit mindestens einer Scheibe (17b) verbunden ist, die eine mittige Bohrung und mindestens zwei Umfangsbohrungen aufweist,
- eine geradlinige Anode (16), die in der Mitte der Kathode (17) vorgesehen ist und die Scheiben (17b) der Kathode (17) durchquert,
- mindestens einen Ringmagneten (18), der die Kammer (12) umgibt, und
- einen Generator (21), der mit der Kathode (17) und der Anode (16) verbunden ist.

6. Detektionsvorrichtung (1) nach einem der vorhergehenden Ansprüche, **dadurch gekennzeichnet, dass** die Detektionsvorrichtung (1) ein Prüfleck (22) aufweist, das mit dem Gehäuse (3) verbunden ist und eine Kapillare (23) und ein Absperrventil (24) aufweist, die zwischen einem Stickstoff-Verteiler und dem Gehäuse (3) angeordnet sind.

7. Detektionsverfahren (100) zur Überprüfung der Dichtheit von versiegelten Produkten in einer Detektionsvorrichtung (1) nach einem der vorhergehenden Ansprüche, **dadurch gekennzeichnet, dass** es die folgenden Schritte aufweist:
- in einem ersten Schritt (101) wird mindestens ein Produkts (2), das zuvor unter einer stickstoffhaltigen Atmosphäre versiegelt wurde, in dem Gehäuse (3) platziert,
- in einem zweiten Schritt (102) wird das Absperrventil (9) geöffnet, um das Gehäuse (3) mit dem Puffervolumen (8) unter Vakuum (102) in Verbindung zu bringen,
- in einem dritten Schritt (103) wird kontinuierlich ein von Stickstoff verschiedenes Ersatzgas in das Gehäuse eingebracht und, während das sekundäre Vakuumpumpen in dem Gehäuse (3) fortgeführt wird, werden die in dem Gehäuse (3) enthaltenen Gase unter Verwendung des Ionisations-Vakuummeters (5) ionisiert, um die Entwicklung der Stickstoffkonzentration in dem Gehäuse (3) durch optische Emissionsspektrometrieanalyse zu überwachen und das Vorhandensein einer Leckage des versiegelten Produkts (2) zu identifizieren, wobei die Öffnung der Drosseleinrichtung mit veränderlichem Leitwert (10) und der Volumenstrom der Gasinjektionsvorrichtung (11) geregelt werden, um in der Kammer (12) des Ionisations-Vakuummeters (5) ein Plasma zu erzeugen und gezündet aufrechtzuerhalten.

8. Detektionsverfahren (100) nach dem vorhergehenden Anspruch, **dadurch gekennzeichnet, dass** in dem zweiten Schritt (102) die Öffnung der Drosseleinrichtung mit veränderlichem Leitwert (10) maximal ist und der Volumenstrom der Gasinjektionsvorrichtung (11) minimal ist.

9. Detektionsverfahren (100) nach dem vorhergehenden Anspruch, **dadurch gekennzeichnet, dass** in dem dritten Schritt (103) Zug und Zug mit dem sinkenden Druck in dem Gehäuse (3) zunächst die Öffnung der Drosseleinrichtung mit veränderlichem Leitwert (10) reduziert wird, bevor der Volumenstrom der Gasinjektionsvorrichtung (11) erhöht wird, um das Plasma gezündet aufrechtzuerhalten.

10. Detektionsverfahren (100) nach einem der Ansprüche 7 bis 9, **dadurch gekennzeichnet, dass** in einem vierten Schritt (104) das Absperrventil (9) geschlossen wird, während das Einbringen des Ersatzgases in das Gehäuse (3) für die Rückkehr auf atmosphärischen Druck fortgeführt wird.

11. Detektionsverfahren (100) nach einem der Ansprüche 7 bis 10, **dadurch gekennzeichnet, dass** ein Ersatzgas in das Gehäuse (3) eingebracht wird, um die Wände des Gehäuses (3) im Laufe des ersten Schrittes (101) mit Ersatzgas auszuspülen.

12. Detektionsverfahren (100) nach einem der Ansprüche 7 bis 11, **dadurch gekennzeichnet, dass** das Ersatzgas ausgewählt ist aus Argon, Xenon, Helium, Kohlenstoffdioxid, Krypton und Neon.

13. Detektionsverfahren (100) nach einem der Ansprüche 7 bis 12, **dadurch gekennzeichnet, dass** ein Kalibrationstest mit einem einwandfreien versiegelten Produkt (2) durchgeführt wird, das in dem Gehäuse (3) enthalten ist, in das ein bekannter Volumenstrom von Stickstoff über ein Prüfleck (22) der Detektionsvorrichtung (1) eingebracht wird.

## Claims

1. Detection device (1) for checking the leaktightness of sealed products (2), comprising:
- an enclosure (3) configured to receive at least one product (2) which has been sealed under a nitrogen-containing atmosphere,
- a turbomolecular vacuum pump (7),
- an ionized gas gauge (5),
- a buffer volume (8) fluidically connected to a chamber (12) of the ionized gas gauge (5),
- an isolation valve (9) interposed between the enclosure (3) and the buffer volume (8) and configured to place the buffer volume (8) in communication with, or isolate it from, the enclosure (3),
- a gas injection device (11) configured to inject a variable flow rate of replacement gas distinct from nitrogen into the enclosure (3) containing the sealed product (2), **characterized in that** the detection device (1) further comprises:
- a conductance-variable restriction (10) interposed between the inlet of the turbomolecular vacuum pump (7) and the buffer volume (8), the conductance-variable restriction (10) having a variable opening, and
- a control unit (20) configured to control the variable opening of the conductance-variable restriction (10) and/or the flow rate of the gas injection device (11) in dependence on a control parameter of the ionized gas gauge (5) in order to ignite or maintain a plasma in the chamber (12).

2. Detection device (1) according to the preceding claim, **characterized in that** the control parameter of the ionized gas gauge (5) is the voltage of a generator of a plasma generation device (13).

3. Detection device (1) according to either of the preceding claims, **characterized in that** the conductance-variable restriction (10) comprises a diaphragm.

4. Detection device (1) according to any of the preceding claims, **characterized in that** the ionized gas gauge (5) comprises:
- a chamber (12),
- a plasma generation device (13) configured to generate a plasma in the chamber (12),
- an optical emission spectrometer (14),
- an optical window (15) allowing the light emitted by the plasma to be analysed by the optical emission spectrometer (14).

5. Detection device (1) according to the preceding claim, **characterized in that** the plasma generation device (13) comprises:
- a cathode (17) comprising a cylindrical wall (17a) connected to at least one disc (17b) having a central hole and at least two peripheral holes,
- a rectilinear anode (16) arranged at the centre of the cathode (17) and passing through the discs (17b) of the cathode (17),
- at least one toric magnet (18) surrounding the chamber (12), and
- a generator (21) connected to the cathode (17) and the anode (16).

6. Detection device (1) according to any of the preceding claims, **characterized in that** the detection device (1) comprises a calibrated leak (22), connected to the enclosure (3), comprising a capillary (23) and an isolation valve (24) which are interposed between a nitrogen dispenser and the enclosure (3).

7. Detection method (100) for checking the leaktightness of sealed products in a detection device (1) according to any of the preceding claims, **characterized in that** it comprises the following steps:
- in a first step (101), at least one product (2) which has been previously sealed under a nitrogen-containing atmosphere is placed in the enclosure (3),
- in a second step (102), the isolation valve (9) is opened so as to place the enclosure (3) in communication with the buffer volume (8) under vacuum (102),
- in a third step (103), a replacement gas distinct from nitrogen is continuously injected into the enclosure and, while continuing the high vacuum pumping in the enclosure (3), the gases contained in the enclosure (3) are ionized by means of the ionized gas gauge (5) in order to monitor the evolution, in the enclosure (3), of the nitrogen concentration via analysis by optical emission spectroscopy and identify the presence of a leak from said sealed product (2), the opening of the conductance-variable restriction (10) and the flow rate of the gas injection device (11) being controlled so as to generate and maintain an ignited plasma in the chamber (12) of the ionized gas gauge (5).

8. Detection method (100) according to the preceding claim, **characterized in that**, in the second step (102), the opening of the conductance-variable restriction (10) is maximal and the flow rate of the gas injection device (11) is minimal.

9. Detection method (100) according to the preceding claim, **characterized in that**, in the third step (103), as the pressure in the enclosure (3) progressively drops, the opening of the conductance-variable restriction (10) is first reduced before the flow rate of the gas injection device (11) is increased in order to maintain the ignited plasma.

10. Detection method (100) according to any of Claims 7 to 9, **characterized in that**, in a fourth step (104), the isolation valve (9) is closed while the replacement gas continues to be injected for the return to atmospheric pressure in the enclosure (3).

11. Detection method (100) according to any of Claims 7 to 10, **characterized in that** a replacement gas is injected into the enclosure (3) in order to sweep the walls of the enclosure (3) with replacement gas during the first step (101).

12. Detection method (100) according to any of Claims 7 to 11, **characterized in that** the replacement gas is selected from among argon, xenon, helium, carbon dioxide, krypton and neon.

13. Detection method (100) according to any of Claims 7 to 12, **characterized in that** a calibration test is carried out with an intact sealed product (2) contained in the enclosure (3) into which a known flow rate of nitrogen is injected via a calibrated leak (22) of the detection device (1).
